# EUROPÄISCHE PATENTSCHRIFT

(11) **EP 0 775 867 B1**
(45) Veröffentlichungstag und Bekanntmachung des Hinweises auf die Patenterteilung: **23.06.1999**
(21) Anmeldenummer: 96118073.4
(22) Anmeldetag: 12.11.1996
(51) Int. Cl.: F16L 59/02, F16L 59/06

(54) **Wärmeisolierende Umhüllung für wärmetechnische Geräte**
Heat insulating coating for thermal apparatus
Enveloppe calorifuge pour appareils thermiques

(30) Priorität: 21.11.1995 DE 29518428 U
(43) Veröffentlichungstag der Anmeldung: 28.05.1997
(73) Patentinhaber: AEG Hausgeräte GmbH, 90429 Nürnberg (DE)
(72) Erfinder: Greiner, Peter, Dr. Dipl.-Ing., 90451 Nürnberg (DE); Schönweiss, Horst, Dipl.-Ing., 90610 Winkelhaid (DE)

(56) Entgegenhaltungen:
- GB-A- 474 370
- GB-A- 2 265 208
- US-A- 4 386 128

## Beschreibung

Die Erfindung betrifft eine wärmeisolierende Umhüllung für wärmetechnische Geräte nach dem Oberbegriff des Patentanspruchs 1.

Wärmeisolierende Umhüllungen dieser Art für wärmetechnische Geräte sind z. B. aus der DE 40 03 770 C2 oder der GB-A-2265208 bekannt. Solche wärmeisolierenden Umhüllungen bestehen in der Regel aus mit, beispielsweise bei der GB-A-2265208 kegelstumpfförmigen, Prägungen versehenen Aluminiumfolien, so daß beim Aufeinanderschichten von mehreren Folien zwischen den einzelnen Folienlagen Kammern entstehen, die mit einem wärmeisolierenden Medium, z. B. Luft gefüllt sind. Dadurch soll der Wärmeabfluß vom zu schützenden Gerät gedämmt werden. Die Prägungen bei diesen Aluminiumfolien sind nur von geringer Tiefe, so daß der Abstand zwischen den einzelnen aufeinandergeschichteten Aluminiumfolien ebenfalls nur sehr gering ist. Um nun bei einem wärmetechnischen Gerät, z. B. einer Herdmuffel, eine ausreichende Wärmeisolierung zu erreichen, ist bei Verwendung solcher Aluminiumfolien zum Aufbau der erforderlichen Wärmedämmung eine Vielzahl von Folienschichten erforderlich. Dadurch werden die Kosten einer Geräteisolierung jedoch erheblich in die Höhe getrieben. Des weiteren ergeben sich bei solchen Präge-Aluminiumfolien durch die Prägungen unzählige Kontaktstellen zwischen den einzelnen Folienschichten bzw. Folienlagen. Die Folge davon sind eine Vielzahl von Wärmebrücken zwischen den einzelnen Folien, über die bedingt durch die gute Wärmeleitung von Aluminium ein Wärmeübergang stattfindet.

Die GB-A-474370 offenbart eine Wärmeisolierung mit zwei Aluminiumfolien, die jeweils zwei parallel zueinander verlaufende Doppelfalten aufweisen, wobei die eine Hälfte der Doppelfalte nach unten und die andere Hälfte der Doppelfalte nach oben zeigt. Die einander gegenüberliegenden Hälften der Doppelfalten der beiden Aluminiumfolien sind überkreuz angeordnet. Dadurch liegen die gekreuzten Doppelfalten der beiden benachbarten Aluminiumfolien in den Berührungspunkten aufeinander. Am Rand sind die Doppelfalten zur Stabilisierung umgebogen. Ferner sind die beiden Aluminiumfolien miteinander am Rand verbunden.

Der Erfindung liegt die Aufgabe zugrunde, eine Weiterbildung der wärmeisolierenden Umhüllung der in Rede stehenden Art anzugeben.

Die Lösung dieser Aufgabe gemäß der Erfindung ist dem Anspruch 1 zu entnehmen. Vorteilhafte weitere Ausgestaltungen des Gegenstandes der Erfindung sind in den Unteransprüchen angegeben.

Durch die vorgeschlagenen Maßnahmen wird erreicht, daß für den Aufbau einer ausreichenden wärmeisolierenden Umhüllung für wärmetechnische Geräte die Anzahl der dafür benötigten Aluminiumfolien erheblich reduziert werden kann.

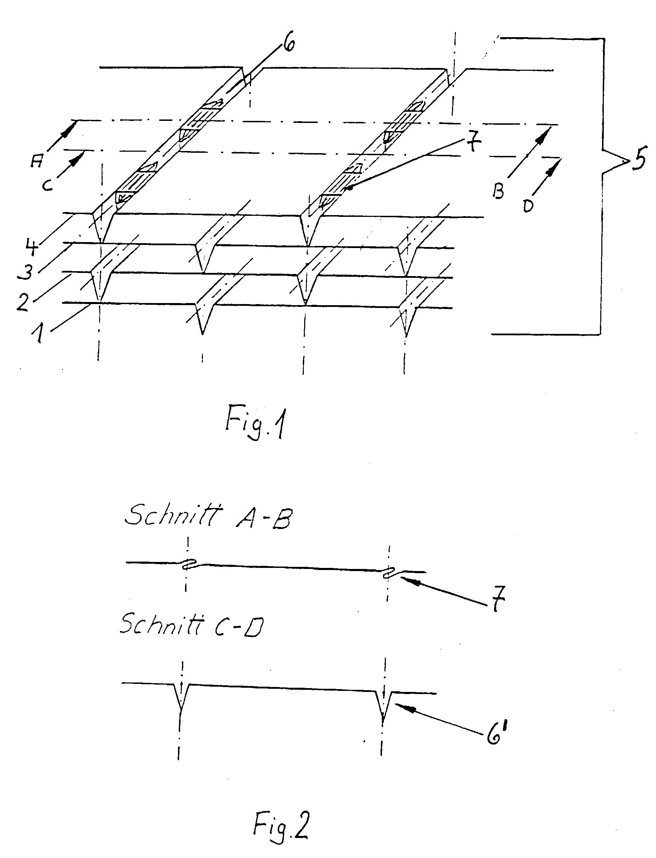

Ein Ausführungsbeispiel der Erfindung ist in der Zeichnung dargestellt.

In den einzelnen Figuren der Zeichnung ist die erfindungsgemäße Ausbildung der Aluminiumfolie für umhüllende Isolierzwecke rein schematisch dargestellt.

Die einzelnen Aluminiumfolien 1, 2, 3, 4 eines Umhüllungspaketes 5 für ein wärmetechnisches Gerät, z. B. der Ofenmuffel eines Herdes, sind mit in Breitenrichtung verlaufenden Verformungskonturen 6 versehen, durch denen die aufeinandergelegten Folien untereinander auf die Distanz gehalten werden. Die Verformungskonturen 6 sind als V-förmige Knitterfalten 6' ausgebildet. Dadurch ergibt sich eine minimale lineare Berührung der einzelnen Folien untereinander. Die linearen Verformungskonturen 6 sind durch periodisch vorgenommene Verquetschungen 7 (Stege) untereinander stabilisiert. Durch diese Verquetschungen ist es auch möglich, die Folien in Längsrichtung zu spannen, ohne daß die Verformungskonturen aufgehoben werden. Eine weitere Funktion der Verquetschungen 7 ist die, beim Aufeinanderlegen der Folien sicherzustellen, daß die Verformungskonturen bei einem Aufeinandertreffen abgestützt sind.

## Patentansprüche

1. Wärmeisolierende Umhüllung für wärmetechnische Geräte, bestehend aus mehreren, mit einem wärmeisolierenden Medium gefüllte Hohlräume umschließenden Aluminiumfolien (1, 2, 3, 4), die untereinander durch Verformungskonturen auf Distanz gehalten sind, *dadurch gekennzeichnet,* daß die Verformungskonturen als zueinander parallele V-förmige Knitterfalten (6') ausgebildet sind und daß die Verformungskonturen (6') durch periodisch vorgenommene Verquetschungen (7) stabilisiert sind.

2. Umhüllung nach Anspruch 1, dadurch gekennzeichnet, daß die V-förmigen Verformungskonturen (6') in Breitenrichtung der Aluminiumfolie verlaufend ausgebildet sind.

3. Umhüllung nach Anspruch 1 oder Anspruch 2, bei der die Verformungskonturen bei jeder Aluminiumfolie (1, 2, 3, 4) an nur einer Seite angeordnet sind und auf der Oberfläche der jeweils benachbarten Aluminiumfolie aufliegen.

## Claims

1. Heat-insulating covering for thermal apparatus, consisting of a plurality of aluminium foils (1, 2, 3, 4) which enclose cavities filled with a heat-insulating medium and which are held apart one below another by deformation contours, characterised in that the deformation contours are formed as parallel V-shaped crease-resistant folds (6') and in that the deformation contours (6') are stabilised by periodic squeezing (7).

2. Covering according to claim 1, characterised in that the V-shaped deformation contours (6') are formed extending in the width direction of the aluminium foil.

3. Covering according to claim 1 or 2, in which the deformation contours in each aluminium foil (1, 2, 3, 4) are disposed only on one side and rest on the upper face of the respectively adjacent aluminium foil.

## Revendications

1. Enveloppe isolante à la chaleur pour des appareils thermiques, constituée de plusieurs feuilles d'aluminium, (1, 2, 3, 4) renfermant des espaces creux remplis d'un milieu isolant à la chaleur, qui sont maintenues à distance les unes des autres par des contours de déformation, caractérisée en ce que les contours de déformation sont réalisés comme plis froissés (6') parallèles les uns aux autres, et en ce que les contours de déformation (6) sont stabilisés par des écrasements (7) effectués périodiquement.

2. Enveloppe selon la revendication 1, caractérisée en ce que les contours de déformation (6') en forme de V sont réalisés pour s'étendre dans la direction de la largeur de la feuille d'aluminium.

3. Enveloppe selon la revendication 1 ou la revendication 2, où les contours de déformation dans chaque feuille d'aluminium (1, 2, 3, 4) sont disposés seulement à un côté et reposent sur la surface de la feuille d'aluminium respectivement avoisinante.
